# EUROPÄISCHE PATENTANMELDUNG

(11) **EP 3 929 851 A1**
(43) Veröffentlichungstag der Anmeldung: **29.12.2021**
(21) Anmeldenummer: 21173902.4
(22) Anmeldetag: 14.05.2021
(51) Int. Cl.: G06Q 30/00, G06Q 50/30

(54) **VERFAHREN ZUM REGISTRIEREN EINES TICKETMEDIUMS**

(30) Priorität: 26.06.2020 DE 102020116943
(71) Anmelder: Scheidt & Bachmann GmbH, 41238 Mönchengladbach (DE)
(72) Erfinder: Krivosik, Martin, 91927 Brestovany (SK)
(74) Vertreter: Cohausz & Florack

(57) **Zusammenfassung**

Die Anmeldung betrifft ein Verfahren zum Registrieren eines Ticketmediums (124) für die Nutzung einer Transportdienstleistung, umfassend Erfassen, durch eine Validatorvorrichtung (126) eines Transportsystems (100), zumindest einer elektronischen Mediumkennung eines nichtregistrierten Ticketmediums (124), welches für eine Inanspruchnahme der Transportdienstleistung verwendet wird, Übertragen eines Identifikationsdatensatzes, enthaltend zumindest die erfasste elektronische Mediumkennung, an eine Rechenvorrichtung (102), Generieren, durch die Rechenvorrichtung (102), eines Abrechnungsdatensatzes, zumindest basierend auf dem übertragenen elektronischen Identifikationsdatensatz, wobei der Abrechnungsdatensatz zumindest eine der in Anspruch genommenen Transportdienstleistung zugeordnete Transaktionskennung enthält, Zuordnen, durch die Rechenvorrichtung (102), zumindest der Transaktionskennung zu der elektronischen Mediumkennung, Speichern, durch die Rechenvorrichtung (102), zumindest der Zuordnung von der elektronischen Mediumkennung zu der Transaktionskennung, Ausgeben, durch die Rechenvorrichtung (102), des generierten Abrechnungsdatensatzes, Empfangen, durch die Rechenvorrichtung (102), mindestens einer Registrierungsnachricht, enthaltend zumindest die Transaktionskennung des ausgegebenen Abrechnungsdatensatzes, Bestimmen, durch die Rechenvorrichtung (102), der elektronischen Mediumkennung, zumindest basierend auf der mindestens einen gespeicherten Zuordnung von der Transaktionskennung zu der elektronischen Mediumkennung und der Transaktionskennung der empfangenen Registrierungsnachricht, und Registrieren, durch die Rechenvorrichtung (102), des nichtregistrierten Ticketmediums (124) durch Erstellen eines Nutzerdatensatzes, enthaltend zumindest die bestimmte elektronische Mediumkennung.

## Beschreibung

Die Anmeldung betrifft ein Verfahren zum Registrieren eines Ticketmediums für die Nutzung einer Transportdienstleistung. Darüber hinaus betrifft die Anmeldung eine (zentrale) Rechenvorrichtung eines Transportsystems und ein Transportsystem.

Transportsysteme zum Durchführen von Transportdienstleistungen sind aus dem Stand der Technik bekannt. Unter einer Transportdienstleistung in einem Transportsystem ist insbesondere die Nutzung einer Transportvorrichtung, insbesondere eines Transportfahrzeugs (z.B. Bus, Bahn, Flugzeug, Wasserfahrzeug etc.), durch einen Nutzer zu verstehen. Anders ausgedrückt, kann ein Transportsystem mindestens eine Transportvorrichtung zum Transportieren von Nutzern bzw. Personen umfassen.

Um bei konventionellen (Personen-) Transportsystemen eine Nutzerberechtigung für die Nutzung einer Transportdienstleistung zu erwerben, kann ein Nutzer, typischerweise vor der Nutzung der Transportdienstleistung, die Nutzerberechtigung beispielsweise durch Kauf eines Tickets erhalten. Beispielhafte und nicht abschließende Nutzerberechtigungen bei Transportsystemen sind Einzel- oder Mehrfachfahrtickets, sowie Zeitfahrkarten, wie beispielsweise Wochen- oder Monatstickets.

In der heutigen Zeit umfassen Transportsysteme vermehrt Ticketsysteme, bei denen Ticketmedien mit elektronischen Nutzerberechtigungen verwendet werden, wie elektronische Tickets. Bei Varianten derartiger Transportsysteme kann eine Nutzerberechtigung auch eine durch eine Validatorvorrichtung auslesbare elektronische Mediumkennung eines (tragbaren) Ticketmediums sein, wie eine elektronische Kartenkennung eines Ticketmediums in Form einer Kreditkarte und/oder Debitkarte oder eine elektronische Kennung einer Zahlungsdienstleistungsanwendung.

Grundsätzlich kann eine berechtigte Inanspruchnahme einer Transportdienstleistung durch einen Nutzer wie folgt erfolgen: Beim Betreten eines zahlungspflichtigen Raums (z.B. Transportfahrzeug, ein Bahnsteig eines Startbahnhofs etc.) durch den Nutzer kann durch eine Validatorvorrichtung des Transportsystems die auf dem Ticketmedium gespeicherte elektronische Mediumkennung erfasst werden. Die Validatorvorrichtung kann an dem mindestens einen Zugang (z.B. Ein- und/oder Ausgang) zu dem zahlungspflichtigen Raum installiert sein. Insbesondere kann eine Validatorvorrichtung über mindestens eine Ticketmediumschnittstelle verfügen, wie ein Ticketmediumlesegerät, beispielweise in Form eines Kartenlesers. Ein an (mit einer ausreichenden Reichweite) oder in das Lesegerät gehaltenes Ticketmedium kann ausgelesen werden, so dass die gespeicherte elektronische Mediumkennung erfasst werden kann. Es versteht sich, dass eine Validatorvorrichtung mit wenigstens einem Sperrelement ausgeführt sein kann (z.B. als Zugangssperre oder so genanntes "Gate") oder ohne Sperrelement (z.B. als Entwerter).

Bei einem Verlassen des zahlungspflichtigen Raums kann durch eine weitere oder die gleiche Validatorvorrichtung des Transportsystems die auf dem Ticketmedium gespeicherte elektronische Mediumkennung erneut erfasst werden, wie zuvor beschrieben wurde.

Für die Abrechnung der in Anspruch genommenen Transportdienstleistung kann die mindestens eine Validatorvorrichtung die jeweils erfasste elektrische Mediumkennung in Form eines Identifikationsdatensatz an eine (zentrale) Rechenvorrichtung des Transportsystems übertragen. Vorzugsweise kann der Identifikationsdatensatz weitere Daten umfassen, wie eine systemweit eineindeutige Identifikationsnummer der Validatorvorrichtung und/oder eine Erfassungszeitangabe.

Die Rechenvorrichtung kann beispielsweise ein Teil eines Backendsystems (auch Hintergrundsystem genannt) des Transportsystems sein und/oder das Backendsystem bilden. Ein auf der Rechenvorrichtung implementiertes Abrechnungsmodul kann, basierend auf der elektronischen Mediumkennung (die insbesondere Abrechnungsdaten, wie eine Kreditkartennummer oder dergleichen umfassen kann), den Ortsangaben und/oder Zeitangaben eine Abrechnung über die in Anspruch genommene Transportdienstleistung durchführen. Beispielsweise kann eine zeit- und/oder entfernungsbasierte Abrechnung durchgeführt werden. Es versteht sich, dass die Abrechnung ferner auf vorgegebenen Tarifdaten beruhen kann. Dies kann dem Nutzer dann in herkömmlicher Weise in Rechnung gestellt werden, beispielsweise in Form einer Kreditkartenabrechnung.

Für die Nutzung der Transportdienstleistung ist es bei dem beschriebenen Transportsystem nicht erforderlich, dass das Ticketmedium in dem Transportsystem registriert ist. Der Betrieb des Transportsystems kann jedoch vereinfacht und insbesondere für einen Nutzer komfortabler und nutzerfreundlicher gestaltet werden, wenn ein Nutzer in dem Transportsystem registriert ist. Eine Registrierung meint vorliegend insbesondere, dass das für die Inanspruchnahme bzw. Nutzung von Transportdienstleistungen verwendete Ticketmedium des Nutzers registriert wird, also insbesondere ein Nutzerdatensatz (zum Beispiel in Form eines Nutzerkontos) erstellt wird, der zumindest die elektronische Mediumkennung des Ticketmediums des Nutzers enthält.

Ein Verfahren zur Registrierung eines Ticketmediums bzw. der elektronischen Mediumkennung ist aus der Druckschrift US 8 991 699 B2 bekannt. Bei diesem Verfahren umfasst das Transportsystem speziell ausgebildete Nutzerterminals, an denen ein Nutzer zunächst ein Kundenkonto durch Eingabe von Nutzerdaten anlegen muss. Anschließend wird der Nutzer an dem Nutzerterminal dazu aufgefordert, das zu verwendende und bisher nichtregistrierte Ticketmedium an eine Ticketmediumschnittstelle des Nutzerterminals zu halten, derart, dass zumindest die elektronische Mediumkennung des nichtregistrierten Ticketmediums erfasst wird. Insbesondere ist die Ticketmediumschnittstelle speziell für die Auslesung zumindest der elektronischen Mediumkennung eingerichtet. Die elektronische Mediumkennung ist dem Nutzer in der Regel selbst nicht bekannt, sondern nur in elektronischer Form in einem Speichermittel des Ticketmediums (unveränderbar) gespeichert.

Nach einer Auslesung der elektronischen Mediumkennung wird die Mediumkennung gemäß der US 8 991 699 B2 dem zuvor angelegten Nutzerkonto zugeordnet und insbesondere ein Nutzerdatensatz gespeichert, enthaltend die elektronische Mediumkennung. Nach einer entsprechenden Registrierung kann der Nutzer mit seinem registrierten Ticketmedium in dem Transportsystem dann Transportdienstleistungen in Anspruch nehmen, wie eingangs beschrieben wurde.

Nachteilig an dem Verfahren gemäß der Druckschrift US 8 991699 B2 ist jedoch, dass die Registrierung für den Nutzer aufwendig ist und somit wenig nutzerfreundlich. Vor einer Nutzung ist eine Registrierung an einem speziell ausgebildeten Nutzerterminal notwendig. Zudem ist es erforderlich, dass das Transportsystem die genannten speziell ausgebildeten Nutzerterminals umfasst, welches einen erhöhten Aufwand, Platzbedarf sowie Kosten mit sich bringt.

Daher liegt der Anmeldung die Aufgabe zugrunde, ein Verfahren zum Registrieren eines Ticketmediums für die Nutzung einer Transportdienstleistung bereitzustellen, bei dem die vorgenannten Nachteile zumindest reduziert sind und insbesondere eine nutzerfreundliche und aufwandsarme Registrierung des Ticketmediums ermöglicht wird.

Die Aufgabe wird gemäß einem ersten Aspekt der Anmeldung gelöst durch Verfahren zum Registrieren eines Ticketmediums für die Nutzung einer Transportdienstleistung. Das Verfahren umfasst:
- Erfassen, durch eine Validatorvorrichtung eines Transportsystems, zumindest einer elektronischen Mediumkennung eines nichtregistrierten Ticketmediums, welches für eine Inanspruchnahme der Transportdienstleistung verwendet wird,
- Übertragen eines Identifikationsdatensatzes, enthaltend zumindest die erfasste elektronische Mediumkennung, an eine Rechenvorrichtung,
- Generieren, durch die Rechenvorrichtung, eines Abrechnungsdatensatzes, zumindest basierend auf dem übertragenen elektronischen Identifikationsdatensatz,
- wobei der Abrechnungsdatensatz zumindest eine der in Anspruch genommenen Transportdienstleistung zugeordnete Transaktionskennung enthält,
- Zuordnen, durch die Rechenvorrichtung, zumindest der Transaktionskennung zu der elektronischen Mediumkennung,
- Speichern, durch die Rechenvorrichtung, zumindest der Zuordnung von der elektronischen Mediumkennung zu der Transaktionskennung,
- Ausgeben, durch die Rechenvorrichtung, des generierten Abrechnungsdatensatzes,
- Empfangen, durch die Rechenvorrichtung, mindestens einer Registrierungsnachricht, enthaltend zumindest die Transaktionskennung des ausgegebenen Abrechnungsdatensatzes,
- Bestimmen, durch die Rechenvorrichtung, der elektronischen Mediumkennung, zumindest basierend auf der mindestens einen gespeicherten Zuordnung von der Transaktionskennung zu der elektronischen Mediumkennung und der Transaktionskennung der empfangenen Registrierungsnachricht, und
- Registrieren, durch die Rechenvorrichtung, des nichtregistrierten Ticketmediums durch Erstellen eines Nutzerdatensatzes, enthaltend zumindest die bestimmte elektronische Mediumkennung.

Indem im Gegensatz zum Stand der Technik bei dem anmeldungsgemäßen Verfahren vorgesehen ist, dass die Erfassung eines elektronischen Identifikationsdatensatzes, enthaltend zumindest eine (eineindeutige) elektronische Mediumkennung, eines nichtregistrierten Ticketmediums im Rahmen einer Inanspruchnahme einer Transportdienstleistung erfolgt und anschließend eine Registrierung dieser erfassten elektronischen Mediumkennung zumindest basierend auf einer Transaktionskennung eines (ohnehin) für die in Anspruch genommene Transportdienstleistung generierten Abrechnungsdatensatzes erfolgt, können die Nachteile des Standes der Technik zumindest reduziert wird.

Insbesondere wird eine nutzerfreundliche und aufwandsarme Registrierung des Ticketmediums ermöglicht. Ein speziell gebildetes Nutzerterminal mit einer speziell ausgebildeten Ticketmediumschnittstelle kann entfallen. Eine Aufstellung derartiger Nutzerterminals sowie eine Bereitstellung des erforderlichen Raums für eine Aufstellung können entfallen. Anstelle eines derartigen Nutzerterminals wird insbesondere eine ohnehin vorgesehene Validatorvorrichtung verwendet.

Das anmeldungsgemäße Verfahren dient insbesondere zum Registrieren eines Nutzers in einem Transportsystem. Dies umfasst vorliegend insbesondere zumindest die Registrierung des für Transportdienstleistungen zu verwendende Ticketmediums durch Speicherung zumindest der in einem Speichermittel des Ticketmediums gespeicherten Mediumkennung in einer Datenspeicheranordnung des Transportsystems.

Eine elektronische Mediumkennung meint insbesondere, dass diese in ihrer Gesamtheit nur in dem Speichermittel des Ticketmediums gespeichert ist (und insbesondere nicht optisch (vollständig) von dem Speichermedium durch einen Nutzer ablesbar ist). Insbesondere ist eine Ticketmediumschnittstelle, beispielweise mit einer (kontaktlosen oder kontraktbehafteten) Schnittstelle, für die Erfassung der elektronischen Mediumkennung erforderlich. Die (kontaktlose oder kontraktbehaftete) Schnittstelle korrespondiert hierbei zu der Schnittstelle des Ticketmediums. Nicht abschließende Beispiele für kontaktbehaftete Ticketmediumschnittstellen sind Magnetstreifen und Europay-Mastercard-VISA-Chips (EMV-Chips); Beispiele für kontaktbehaftete Ticketmediumschnittstellen sind Nearfield Communication-Schnittstellen (NFC-Schnittstellen) gemäß ISO 14443.

Ferner ist anmeldungsgemäß vorgesehen, dass die elektronische Mediumkennung insbesondere eine (systemweit) eineindeutige elektronische Mediumkennung ist. Dies meint insbesondere, dass ein Ticketmedium durch diese Mediumkennung (systemweit) eineindeutig identifiziert werden kann. Insbesondere ermöglicht eine elektronische Mediumkennung bei Kreditkarten und/oder Debitkarten eine Differenzierung zwischen sogenannten Partnerkarten, die jeweils die gleiche Kreditkartennummer aufweisen, jedoch unterschiedliche elektronische Mediumkennungen. Hierbei kann aus der jeweiligen elektronischen Mediumkennung jedoch die Kreditkartennummer ermittelt werden.

Das Ticketmedium ist insbesondere ein tragbares Medium mit mindestens einem auslesbaren Speichermittel, eingerichtet zumindest zum Speichern der elektronischen Mediumkennung. Vorzugsweise kann das Ticketmedium ein kartenbasiertes Ticketmedium sein, wie ein kreditkartenbasiertes und/oder debitkartenbasiertes Ticketmedium. Vorzugswiese kann das Ticketmedium eine Kreditkarte und/oder eine Debitkarte sein. Auch kann das kartenbasierte Ticketmedium ein mobiles Endgerät sein, auf dem eine Kreditkarte und/oder Debitkarte elektronisch abgebildet ist bzw. mit dem eine Kreditkarte und/oder Debitkarte elektronisch (eineindeutig) verknüpft ist. Nicht abschließende Beispiele eines solchen Konzepts sind Apple Pay, Google Pay oder PayPal.

Beispielhafte und nicht abschließende mobile Endgeräte sind hierbei Smartphones, Tablet-Computer, mobile Spielkonsolen, Laptops, Netbooks, Datenbrillen, Smart-Watches und ähnliche Wearables.

Anmeldungsgemäß wird (für eine Registrierung) eine derartige Mediumkennung eines nichtregistrierten Ticketmediums durch eine Validatorvorrichtung erfasst. Eine Validatorvorrichtung ist eine Vorrichtung eines Transportsystems, die ohnehin eingesetzt wird, um die ordnungsgemäße Nutzung einer Transportdienstleistung durch einen Nutzer zu erfassen. Eine Validatorvorrichtung kann beispielsweise an einem Zugang (z.B. Eingang und/oder Ausgang) zu einem zahlungspflichtigen Raum angeordnet sein. Das Betreten dieses Raums ist insbesondere gleichbedeutend mit der Nutzung einer Transportdienstleistung. Der zahlungspflichtige Raum kann beispielsweise der Innenraum einer Transportvorrichtung sein, oder ein (abgegrenzter) Vorraum zu einer Transportvorrichtung, wie ein Bahnsteig oder dergleichen.

Ein Erfassen der Nutzung einer Transportdienstleistung durch eine Validatorvorrichtung umfasst insbesondere ein Erfassen einer elektronischen Mediumkennung, beispielsweise im Rahmen eines Anmeldevorgangs und/oder Abmeldevorgangs. Für eine ordnungsgemäße Nutzung einer Transportdienstleistung kann es beispielsweise erforderlich sein, dass bei einem Betreten des zahlungspflichtigen Raums sich der Nutzer in dem Transportsystem anmeldet, indem insbesondere zumindest eine elektronische Mediumkennung im Rahmen eines Anmeldevorgangs durch die Validatorvorrichtung erfasst wird. In entsprechender Weise kann es erforderlich sein, dass bei einem Verlassen des zahlungspflichtigen Raums sich der Nutzer in dem Transportsystem abmeldet, indem insbesondere zumindest eine elektronische Mediumkennung im Rahmen eines Abmeldevorgangs durch die Validatorvorrichtung erfasst wird. Hierbei kann optional eine Durchgangssperre an dem Zugang vorgesehen sein, welche in Zusammenwirkung mit der Validatorvorrichtung (in herkömmlicher Weise) den Zugang freigibt und/oder sperrt.

Ferner erfolgt anmeldungsgemäß ein Übertragen des Identifikationsdatensatzes an eine (entfernt von der Validatorvorrichtung) angeordnete Rechenvorrichtung. Die mindestens eine Validatorvorrichtung und die mindestens eine Rechenvorrichtung können kommunikationstechnisch über mindestens ein (drahtloses und/oder drahtgebundenes) Kommunikationsnetz verbunden sein. Die mindestens eine Rechenvorrichtung kann insbesondere zumindest ein Teil eines Backendsystems sein. Ein Backendsystem kann - als Rechenvorrichtung - einen oder mehrere (verteilt angeordnete) Server umfassen.

Vorzugsweise kann der mindestens eine Identifikationsdatensatz weitere Daten umfassen, die insbesondere eine Abrechnung der in Anspruch genommenen Transportdienstleistung ermöglichen. Insbesondere kann der Identifikationsdatensatz eine Zeitangabe, insbesondere in Form eines Zeitstempels, enthalten. Der Zeitstempel (z.B. Kalenderdatum und Uhrzeit) kann insbesondere den Erfassungszeitpunkt der Erfassung der Mediumkennung durch die Validatorvorrichtung angeben.

Alternativ oder vorzugsweise zusätzlich kann der Identifizierungsdatensatz eine Orts- bzw. Standortangabe der (die Mediumkennung erfassenden) Validatorvorrichtung umfassen. Eine Orts- bzw. Standortangabe meint insbesondere eine Angabe, aus der der (augenblickliche) Standort bzw. Installationsort der Validatorvorrichtung zumindest abgeleitet werden kann, also den Standort bei der Erfassung der Mediumkennung. Beispielsweise kann die Standortangabe eine Validatorvorrichtungskennung umfassen, aus der mit Hilfe einer Standortdatenbank der Standort der Validatorvorrichtung abgeleitet werden kann. Alternativ oder zusätzlich kann die Standortangabe geographische Positionsdaten (z.B. GPS-Koordinaten) umfassen.

Insbesondere bei mobilen Validatorvorrichtungen, also bei solchen, die in Transportfahrzeugen eingebaut sind, kann die Standortangabe aus fahrzeugseitig vorhandener Infrastruktur ermittelt werden; alternativ kann die Standortangabe auch aus dem Zeitstempel und den Daten der Betriebsführung des Verkehrssystems im Backendsystem ermittelt werden.

Darüber hinaus erfolgt anmeldungsgemäß ein Generieren eines Abrechnungsdatensatzes. Der Abrechnungsdatensatz kann insbesondere für eine Abrechnung generiert und anschließend durch die Rechenvorrichtung (an den entsprechenden Nutzer) ausgegeben werden. Anmeldungsgemäß wird der Abrechnungsdatensatz derart generiert, dass dieser (zusätzlich) für eine Registrierung des Ticketmediums verwendet werden kann.

So ist anmeldungsgemäß vorgesehen, dass ein Abrechnungsdatensatz generiert wird, zumindest basierend auf dem übertragenen elektronischen Identifikationsdatensatz und insbesondere der in Anspruch genommenen Transportdienstleistung (z.B. basierend auf den genannten Zeit- und/oder Ortsangaben). Zusätzlich wird insbesondere für den Abrechnungsdatensatz eine Transaktionskennung generiert und dem Abrechnungsdatensatz zugefügt. Die Transaktionskennung dient der Identifizierung der in Anspruch genommenen (und abgerechneten) Transportdienstleistung. Zudem wird anmeldungsgemäß die Transaktionskennung der erfassten elektronischen Mediumkennung zugeordnet (auf die der entsprechende Abrechnungsdatensatz basiert). Hierdurch ist insbesondere die elektronische Mediumkennung durch die Transaktionskennung identifizierbar.

Diese Zuordnung wird durch die Rechenvorrichtung gespeichert, zumindest für einen bestimmten Zeitraum. Nach Ablauf dieses Zeitraums kann eine Löschung der gespeicherten Daten erfolgen. Mit anderen Worten: die anmeldungsgemäße Registrierung kann vorzugsweise nur in dem bestimmten Zeitraum nach Generieren des Abrechnungsdatensatzes erfolgen. Ein Speichern der Zuordnung meint insbesondere, dass zumindest die Transaktionskennung zusammen mit der elektronischen Mediumkennung gespeichert wird. Beispielsweise bilden Transaktionskennung und zugeordnete Mediumkennung ein Datentupel.

Ein Speichern durch die Rechenvorrichtung meint insbesondere, dass ein Speichermodul das Speichern der mindestens einen Zuordnung kontrollieren kann. Beispielsweise kann die Rechenvorrichtung über eine Datenspeicheranordnung verfügen und/oder mit einer Datenspeicheranordnung kommunikativ verbindbar sein.

Anmeldungsgemäß erfolgt das Ausgeben des generierten Abrechnungsdatensatzes in Form eines Kontoauszugs. Der Kontoauszug bezieht sich dabei auf das (zu registrierende) Ticketmedium, das für die Inanspruchnahme der Transportdienstleistung verwendet wurde. Insbesondere kann der Kontoauszug eine Kreditkartenabrechnung und/oder eine Debitkartenabrechnung und/oder die Abrechnung einer Zahlungsdienstleistungsanwendung sein.

Bei einem Empfang einer Registrierungsnachricht durch die Rechenvorrichtung erfolgt ein Auswerten des Inhalts der Registrierungsnachricht. Die Registrierungsnachricht enthält zumindest die Transaktionskennung des ausgegebenen Abrechnungsdatensatzes. Beispielsweise kann die Registrierungsnachricht durch eine weitere Rechenvorrichtung des Nutzers in Form eines Nutzerendgeräts generiert und insbesondere über ein (drahtloses und/oder drahtgebundenes) Kommunikationsnetz an die Rechenvorrichtung übertragen werden.

Hier ist insbesondere hervorzuheben, dass bei dem anmeldungsgemäßen Verfahren die weitere Rechenvorrichtung des Nutzers nicht über eine Ticketmediumschnittstelle verfügen muss.

Bei einem Empfang der Registrierungsnachricht erfolgt ein Bestimmen der zu registrierenden Mediumkennung, basierend auf der empfangenen Transaktionskennung und der mindestens einen gespeicherten Zuordnung. Insbesondere erfolgt ein Bestimmen, ob eine zu der empfangenen Transaktionskennung korrespondierende (insbesondere identische) Transaktionskennung gespeichert ist.

Gemäß einer Ausführungsform des anmeldungsgemäßen Verfahrens kann das Bestimmen der elektronischen Mediumkennung zumindest ein Vergleichen der Transaktionskennung der empfangenen Registrierungsnachricht mit der mindestens einen gespeicherten Transaktionskennung der mindestens einen gespeicherten Zuordnung umfassen.

Wird keine Korrespondenz (insbesondere Identität) zwischen der empfangenen Transaktionskennung und einer der gespeicherten Transaktionskennung bestimmt, kann das Verfahren abgebrochen werden. Beispielsweise kann eine (negative) Antwortnachricht auf die Registrierungsnachricht gesendet werden. Die Antwortnachricht kann eine Information enthalten, die angibt, dass eine Registrierung fehlgeschlagen ist.

Wird eine Korrespondenz (insbesondere Identität) zwischen der empfangenen Transaktionskennung und einer der gespeicherten Transaktionskennung bestimmt, erfolgt insbesondere eine Registrierung zumindest des Ticketmediums durch Speichern zumindest der elektronischen Mediumkennung, die der bestimmten gespeicherten Transaktionskennung zugeordnet ist. Das Registrieren umfasst ein Erstellen eines Nutzerdatensatzes, vorzugsweise in Form eines Nutzerkontos, welcher/s zumindest die elektronische Mediumkennung umfasst. Beispielsweise kann eine (positive) Antwortnachricht auf die Registrierungsnachricht gesendet werden. Die Antwortnachricht kann eine Information enthalten, die angibt, dass eine Registrierung erfolgreich gewesen ist.

Gemäß einer bevorzugten Ausführungsform des anmeldungsgemäßen Verfahrens kann das Erstellen eines Nutzerdatensatzes, insbesondere in Form eines Nutzerkontos, (zusätzlich) ein Speichern mindestens eines weiteren Nutzerdatums umfassen. Das mindestens eine weitere Nutzerdatum kann ausgewählt sein aus der Gruppe, umfassend:
- Nutzername,
- Adressdaten des Nutzers, insbesondere eine Kommunikationsadresse,
- Nutzerpasswort,
- Abrechnungsdaten, und
- Transportdienstleistungstarifdaten
- Kontodaten,
- Daten mindestens eines weiteren Zahlmediums
- Zugehörigkeit zu einer Nutzergruppe (z.B. eine bestimmte Tarifgruppe, wie Schüler, Vielfahrer etc.).

Vorzugsweise kann die mindestens eine Registrierungsnachricht mindestens ein Datum der vorgenannten Nutzerdaten umfassen. Hierbei kann vorgesehen sein, dass nach einer initialen Registrierung der bestimmten elektronischen Mediumkennung der Nutzer aufgefordert wird, beispielweise durch eine Anforderungsnachricht, mindestens ein weiteres Nutzerdatum anzugeben. Hierbei kann die Eingabe von zumindest einem Teil der Daten optional sein. Insbesondere kann während eines Registrierungsvorgangs eine Mehrzahl von Nachrichten zwischen der weiteren Rechenvorrichtung des Nutzers und der Rechenvorrichtung des Transportsystems ausgetauscht werden.

Vorzugsweise kann dem Nutzer, basierend auf einer Auswertung der mindestens einen bereits in Anspruch genommenen Transportdienstleistung, mindestens eine für den Nutzer optimierte Tarifoption vorgeschlagen werden. Nach einer Bestätigung einer Tarifoption kann diese als Transportdienstleistungstarifdatum in dem Nutzerdatensatz gespeichert werden.

Gemäß einer weiteren Ausführungsform des anmeldungsgemäßen Verfahrens kann die Transaktionskennung eine eineindeutige Transaktionskennung sein. Jeder Abrechnungsdatensatz kann mit einer eineindeutigen Transaktionskennung verknüpft werden, also eine solche umfassen. Mit anderen Worten kann jede Transaktion bzw. jeder Abrechnungsdatensatz durch die Transaktionskennung zumindest transportsystemweit eineindeutig identifizierbar sein. Dies ermöglicht anschließend eine Registrierung der elektronischen Mediumkennung nur anhand der Transaktionskennung. Eine Auswertung weiterer Daten kann entfallen. Insbesondere kann vorgesehen sein, dass die Transaktionskennung transportsystemweit eineindeutig ist (nur) für die Dauer des bestimmten Zeitraums nach Generieren des Abrechnungsdatensatzes, innerhalb dessen die Registrierung möglich ist.

Gemäß einer bevorzugten Ausführungsform des anmeldungsgemäßen Verfahrens kann der (generierte) Abrechnungsdatensatz mindestens ein weiteres Abrechnungsdatum enthalten. Gemäß einer besonders bevorzugten Ausführungsform des anmeldungsgemäßen Verfahrens kann das mindestens eine weitere Abrechnungsdatum ein Abrechnungsdatum sein aus der Gruppe, umfassend:
- ein für die in Anspruch genommene Transportdienstleistung zu entrichtender Betrag,
- ein für die Anspruch genommene Transportdienstleistung angewandtes Tarifmerkmal,
- ein mit der in Anspruch genommenen Transportdienstleistung in Beziehung stehendes Zeitdatum (z.B.: Zeitstempel des Fahrantritts, Zeitstempel der Beendigung der Fahrt, Zeitdauer der Fahrt etc.),
- ein mit der in Anspruch genommenen Transportdienstleistung in Beziehung stehendes Ortsdatum (z.B. Startort der Fahrt, Zielort der Fahrt, zurückgelegte Fahrtstrecke etc.).

Indem der Abrechnungsdatensatz beispielsweise den für die in Anspruch genommene Transportdienstleistung zu entrichtenden Betrag umfasst, kann dieser durch Nutzer bezahlt werden. Ferner können weitere Informationen über die mindestens eine in Anspruch genommene Transportdienstleistung in dem Abrechnungsdatensatz enthalten sein. Dies kann insbesondere mindestens ein Tarifmerkmal sein, auf das der zu entrichten Betrag basiert, wie z.B. die mindestens eine benutzte Tarifzone, Start- und/oder Zielort der Fahrt und/oder weitere Tarifmerkmale, die für den Preis der in Anspruch genommenen Transportdienstleistung bestimmend sind. Dies ermöglicht dem Nutzer beispielweise, den für die in Anspruch genommene Transportdienstleistung zu entrichtenden Betrag besser nachzuvollziehen.

Ferner ist anmeldungsgemäß erkannt worden, dass das mindestens eine (ohnehin) in einem Abrechnungssatz vorgesehene Abrechnungsdatum auch bei der Registrierung, insbesondere der Auswertung der Registrierungsnachricht und dem Bestimmen der Mediumkennung, berücksichtigt werden kann. Wie nachfolgend erläutert wird, kann hierdurch beispielsweise darauf verzichtet werden, dass die Transaktionskennung eine eineindeutige Transaktionskennung sein muss. Alternativ kann bei einer eineindeutigen Transaktionskennung eine zusätzliche (redundante) Verifikation der Auswertung dieser Transaktionskennung erfolgen.

Gemäß einer bevorzugten Ausführungsform des anmeldungsgemäßen Verfahrens kann, bei Vorhandensein mindestens eines weiteren Abrechnungsdatums, das Zuordnen zumindest ein Zuordnen der Transaktionskennung und des weiteren Abrechnungsdatums zu der elektronischen Mediumkennung umfassen. Anders ausgedrückt wird ein Speicherdatensatz gebildet, enthaltend die Transaktionskennung eines Abrechnungsdatensatzes, das mindestens eine weitere Abrechnungsdatum des Abrechnungsdatensatzes (ggf. mindestens ein noch weiteres Abrechnungsdatum des Abrechnungsdatensatzes) und die elektronische Mediumkennung, für die der Abrechnungsdatensatz generiert wird.

Der systemweit eineindeutige Datenschlüssel, der eine Registrierung eines Kunden zu der elektronischen Mediumkennung anhand des Abrechnungsdatensatzes erlaubt, besteht in diesem Fall aus der Transaktionskennung und dem wenigstens einen weiteren Abrechnungsdatum des Abrechnungsdatensatzes. Insbesondere kann in dieser Ausführungsform die Transaktionskennung kürzer (und damit benutzerfreundlicher) sein, wenn sie nicht für sich allein eineindeutig zu sein braucht,

Insbesondere umfasst das Speichern zumindest ein Speichern der Zuordnung von der elektronischen Mediumkennung zu der Transaktionskennung und dem mindestens einen weiteren Abrechnungsdatum. Anders ausgedrückt wird zumindest der vorgenannte Speicherdatensatz durch die Rechenvorrichtung in der mindestens einen Datenspeicheranordnung gespeichert.

Vorzugsweise kann die mindestens eine Registrierungsnachricht zumindest die Transaktionskennung und das weitere Abrechnungsdatum enthalten. Dann kann das Bestimmen der elektronischen Mediumkennung zumindest ein Bestimmen der elektronischen Mediumkennung, basierend auf der mindestens einen gespeicherten Zuordnung von der elektronischen Mediumkennung zu der Transaktionskennung und dem weiteren Abrechnungsdatum und der Transaktionskennung und dem weiteren Abrechnungsdatum der empfangenen Registrierungsnachricht, umfassen.

Bei einer Ausführungsform kann auch vorgesehen sein, dass die initiale Registrierungsnachricht nur die Transaktionskennung enthält. Wird durch die Auswertung festgestellt, dass die Transaktionskennung mehrfach vorhanden ist, beispielsweise unterschiedlichen elektronischen Mediumkennungen zugeordnet ist, kann eine Anforderungsnachricht versendet werden, um mindestens ein weiteres Abrechnungsdatum zu empfangen. Bei Empfang einer weiteren Registrierungsnachricht, enthaltend das mindestens eine (angeforderte) weitere Abrechnungsdatum, als Antwort auf diese Anforderungsnachricht kann die Auswertung fortgesetzt werden. Insbesondere kann anhand des mindestens einen weiteren Abrechnungsdatums die zu registrierende elektronische Mediumkennung (in eineindeutiger Weise) bestimmt werden. Die derart bestimmte Mediumkennung kann dann registriert werden.

In einfacher Weise kann eine Registrierung erfolgen, indem die ohnehin in einem Abrechnungsdatensatz vorhandenen Abrechnungsdaten bei dem Registrierungsvorgang berücksichtigt werden.

Gemäß einer besonders bevorzugten Ausführungsform des anmeldungsgemäßen Verfahrens kann die elektronische Mediumkennung eine kodierte Primary Account Number (kodierte PAN) sein. Die kodierte PAN enthält die bekannte lesbare PAN, die auf ein Debit- oder Kreditkarte aufgedruckt, geprägt oder graviert ist, plus zusätzliche kodierte Daten, wie z.B. die Kartenfolgenummer (card sequence number), die das vorliegenden Kartenindividuum identifiziert. Die kodierte PAN muss also elektronisch aus der Karte ausgelesen werden und ist nicht menschenlesbar.

Die kodierte PAN identifiziert insbesondere eineindeutig Ticketmedien, wie individuelle Kreditkarten und/oder Debitkarten und/oder (vorbeschriebene) mobile Endgeräte. Eine Validatorvorrichtung kann insbesondere zumindest die kodierte PAN durch eine PAN-Schnittstelle auslesen. Aus der kodierten PAN können, insbesondere mit Hilfe von Datenbanken, Land, Kreditinstitut, Bankleitzahl und/oder Kontonummer ermittelt werden. In einfacher Weise kann eine Abrechnung einer Transportdienstleistung ermöglicht werden.

Gemäß einer weiteren Ausführungsform des anmeldungsgemäßen Verfahrens kann das Verfahren ferner umfassen:
- Prüfen, durch die Rechenvorrichtung, ob ein für die in Anspruch genommene Transportdienstleistung zu entrichtender Betrag innerhalb einer bestimmten Zeitdauer entrichtet wurde, und
- Aussenden, durch die Rechenvorrichtung, einer Sperrnachricht an die mindestens eine Validatorvorrichtung, derart, dass die Verwendung des Ticketmediums an der mindestens einen Validatorvorrichtung gesperrt wird.

Um insbesondere eine weitere Inanspruchnahme von Transportdienstleistungen zu unterbinden oder zumindest zu erschweren, wenn der Nutzer den für die in Anspruch genommene Transportdienstleistung zu entrichtenden Betrag nicht innerhalb einer bestimmten Zeitdauer entrichtet hat, kann eine Sperrnachricht an vorzugsweise sämtliche Validatorvorrichtungen des Transportsystems gesendet werden. Die Sperrnachricht kann zumindest die zu sperrende Mediumkennung enthalten. Diese kann in einem lokalen Datenspeicher der mindestens einen Validatorvorrichtung gespeichert werden. Vor einer Freigabe eines Zugangs, beispielsweise durch eine Durchgangssperre, zu einem zahlungspflichtigen Raum kann beispielsweise eine Überprüfung der erfassten Mediumkennung erfolgen, beispielsweise durch eine Vergleichsoperation. Wird festgestellt, dass diese zu einer gespeicherten (unzulässigen) Mediumkennung korrespondiert (z.B. identisch ist), kann der Zugang gesperrt bleiben. Auch kann an einer Anzeigeneinrichtung der Validatorvorrichtung angezeigt werden, dass die (gewünschte) Transportdienstleistung mit dem verwendeten Ticketmedium nicht verwendet werden darf. Dann können weitere Maßnahmen eingeleitet werden.

Ein weiterer Aspekt der Anmeldung ist eine Rechenvorrichtung eines Transportsystems. Die Rechenvorrichtung umfasst:
- mindestens ein Identifikationsempfangsmodul, eingerichtet zum Empfangen eines durch eine Validatorvorrichtung des Transportsystems generierten elektronischen Identifikationsdatensatzes eines nichtregistrierten Ticketmediums, welches für eine Inanspruchnahme einer Transportdienstleistung verwendet wird,
- wobei der elektronische Identifikationsdatensatz mindestens eine durch die Validatorvorrichtung erfasste (eineindeutige) elektronische Mediumkennung des nichtregistrierten Ticketmediums enthält,
- mindestens ein Abrechnungsmodul, eingerichtet zum Generieren eines Abrechnungsdatensatzes, zumindest basierend auf dem empfangenen elektronischen Identifikationsdatensatz und der in Anspruch genommenen Transportdienstleistung,
- wobei der Abrechnungsdatensatz zumindest eine der in Anspruch genommenen Transportdienstleistung zugeordnete Transaktionskennung enthält,
- mindestens ein Zuordnungsmodul, eingerichtet zum Zuordnen zumindest der Transaktionskennung zu der elektronischen Mediumkennung,
- mindestens ein Speichermodul, eingerichtet zum Speichern zumindest der Zuordnung der elektronischen Mediumkennung zu der Transaktionskennung
- mindestens ein Ausgabemodul, eingerichtet zum Ausgeben des generierten Abrechnungsdatensatzes,
- mindestens ein Registrierungsempfangsmodul, eingerichtet zum Empfangen mindestens einer Registrierungsnachricht, enthaltend zumindest die Transaktionskennung des ausgegebenen Abrechnungsdatensatzes,
- mindestens ein Auswertemodul, eingerichtet zum Bestimmen der elektronischen Mediumkennung, zumindest basierend auf der mindestens einen gespeicherten Zuordnung von der Transaktionskennung zu der elektronischen Mediumkennung und auf der Transaktionskennung der empfangenen Registrierungsnachricht, und
- mindestens ein Registrierungsmodul, eingerichtet zum Registrieren des nichtregistrierten Ticketmediums durch Erstellen eines Nutzerdatensatzes, enthaltend zumindest die bestimmte elektronische Mediumkennung.

Insbesondere kann das Verfahren zumindest teilweise durch die Rechenvorrichtung ausgeführt werden. Die Rechenvorrichtung kann durch zwei oder mehr Recheneinrichtungen bzw. Computer (z.B. in Form von Servern) gebildet sein. Insbesondere können die genannten Module zumindest teilweise verteilt auf zwei oder mehr Recheneinrichtungen bzw. Computern (z.B. in Form von Servern) angeordnet sein.

Ein noch weiterer Aspekt der Anmeldung ist ein Transportsystem. Das Transportsystem umfasst:
- mindestens eine zuvor beschriebene Rechenvorrichtung, und
- mindestens eine Validatorvorrichtung, eingerichtet zum Erfassen eines elektronischen Identifikationsdatensatzes eines nichtregistrierten Ticketmediums, welches für eine Inanspruchnahme einer Transportdienstleistung verwendet wird.

Insbesondere kann das Verfahren durch das bzw. in dem Transportsystem ausgeführt werden.

Ein Modul oder eine Vorrichtung kann vorliegend zumindest teilweise aus Software und/oder zumindest teilweise aus Hardware gebildet sein. Insbesondere kann eine Vorrichtung/Element geeignete Rechenelemente (z.B. Prozessor, Speicher, etc.) umfassen, um Softwareelemente (bzw. Computercode) auszuführen.

Die Merkmale der Verfahren, Transportsysteme und Rechenvorrichtungen sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, das anmeldungsgemäße (Registrierungs-) Verfahren, das anmeldungsgemäße Transportsystem und die anmeldungsgemäße Rechenvorrichtung auszugestalten und weiterzuentwickeln. Hierzu sei einerseits verwiesen auf die den unabhängigen Ansprüchen nachgeordneten Ansprüche, andererseits auf die Beschreibung von Ausführungsbeispielen in Verbindung mit der Zeichnung. In der Zeichnung zeigt:
- Fig. 1: eine schematische Ansicht eines Ausführungsbeispiels eines Transportsystems gemäß der vorliegenden Anmeldung mit einem Ausführungsbeispiel einer Rechenvorrichtung gemäß der vorliegenden Anmeldung, und
- Fig. 2: ein Diagramm eines Ausführungsbeispiels eines Verfahrens gemäß der vorliegenden Anmeldung.

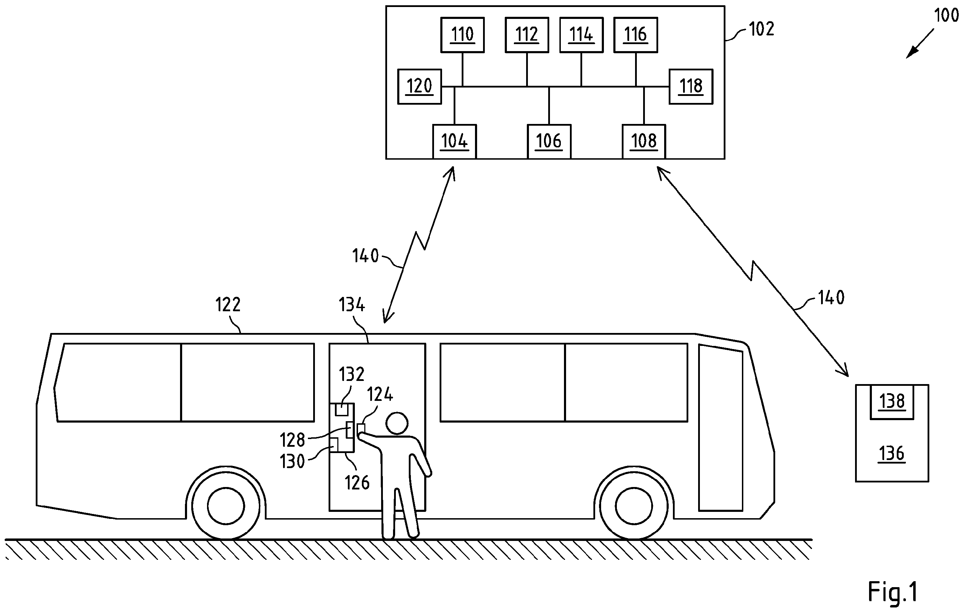

Die Figur 1 zeigt eine schematische Ansicht eines Ausführungsbeispiels eines Transportsystems 100 gemäß der vorliegenden Anmeldung mit einem Ausführungsbeispiel einer Rechenvorrichtung 102 gemäß der vorliegenden Anmeldung.

Das dargestellte Transportsystem 100 umfasst mindestens eine Rechenvorrichtung 102 und mindestens eine Validatorvorrichtung 126. Ferner kann das Transportsystem 100 mindestens eine Transportvorrichtung 122 umfassen, vorliegend beispielhaft in Form eines Busses 122. Es versteht sich, dass ein Transportsystem 100 alternativ oder zusätzlich andere Transportvorrichtungen (z.B. Seilbahn, Bahn, Wasserfahrzeug etc.) umfassen kann.

In dem vorliegenden Beispiel ist die mindestens eine Validatorvorrichtung 126 in dem Transportfahrzeug 122 angeordnet. Wie zu erkennen ist, ist die mindestens eine Validatorvorrichtung 126 an einem Zugang 134 (z.B. Eingang und/oder Ausgang) des Transportfahrzeugs 122 zu einem Zahlungspflichtigen Raum angeordnet, vorzugsweise dem Innenraum des Transportfahrzeugs 122. Vorzugsweise kann an jedem Zugang 134 eines Transportfahrzeugs 122 mindestens eine Validatorvorrichtung 126 angeordnet sein. Bei anderen Varianten kann die Validatorvorrichtung auch in einem Bahnhof oder dergleichen angeordnet sein.

Beim Betrieb des Transportsystems 100 kann sich ein Nutzer des Transportfahrzeugs 122 für eine berechtigte Nutzung der Transportdienstleistung bei einem Zustieg zu dem Transportfahrzeug 122 anmelden. Hierzu kann der Nutzer insbesondere sein Ticketmedium 124 insbesondere in Reichweite einer Ticketmediumschnittstelle 128 der Validatorvorrichtung 126 bringen.

Die mindestens eine Ticketmediumschnittstelle 128 kann eine kontaktbehaftete oder kontaktlose Ticketmediumschnittstelle 128 sein. Es versteht sich, dass zwei oder mehr Ticketmediumschnittstellen vorgesehen sein können, für eine entsprechende Anzahl unterschiedlicher Ticketmedien.

Insbesondere kann, durch die Ticketmediumschnittstelle 128, zumindest eine elektronische Mediumkennung des Ticketmediums 124 in dem Anmeldevorgang erfasst werden.

Die Validatorvorrichtung 126 kann mindestens ein Kommunikationsmodul 132 aufweisen und/oder mit mindestens einem (nicht gezeigten) Kommunikationsmodul verbindbar sein. Das Kommunikationsmodul 132 kann zumindest eingerichtet sein, eine erfasste elektronische (eineindeutige) Mediumkennung, vorzugsweise zusammen mit weiteren Daten, an eine (zentrale) Rechenvorrichtung 102 eines Backendsystem des Transportsystems zu übertragen. Insbesondere erfolgt ein Übertragen eines entsprechenden Identifikationsdatensatzes.

Weitere Daten des Identifikationsdatensatzes können insbesondere ein Zeitstempel (z.B. Kalenderdatum und Uhrzeit des Erfassungszeitpunkts) und/oder mindestens eine Standortangabe sein, aus der der Standort der Validatorvorrichtung (bzw. des Transportfahrzeugs 122) während der Erfassung der elektronischen Mediumkennung zumindest ableitbar ist.

Optional kann die Validatorvorrichtung 126 über mindestens einen lokalen Datenspeicher 130 verfügen. In dem mindestens einen Datenspeicher 130 kann eine Liste mit gesperrten bzw. nicht berechtigten elektronischen Mediumkennungen gespeichert sein. Wenn die elektronische Mediumkennung erfasst wird, kann diese mit den gespeicherten und gesperrten Mediumkennungen verglichen werden. Wenn eine Korrespondenz (insbesondere Identität) detektiert wird, kann die Rechenvorrichtung 102 entsprechend informiert werden.

Auf einer (nicht gezeigten) Anzeigeneinrichtung der Validatorvorrichtung 126 kann alternativ oder zusätzlich angezeigt werden, dass das Ticketmedium 124 nicht zur ordnungsgemäßen Nutzung des Transportfahrzeugs 122 berechtigt ist.

Bei anderen Varianten der Anmeldung kann zusätzlich eine Zugangsvorrichtung (z.B. eine Durchgangssperre) vorgesehen sein. Diese kann nur dann freigegeben werden, wenn bei dem Abgleich festgestellt wird, dass die erfasste elektronische Mediumkennung keine gesperrte Mediumkennung ist.

Beim Verlassen des Transportfahrzeugs 122 kann sich der Nutzer abmelden, insbesondere analog zu dem vorbeschriebenen Anmeldevorgang. In entsprechender Weise kann eine Validatorvorrichtung (beispielsweise die gleiche Validatorvorrichtung 126) zumindest die elektronische Mediumkennung, vorzugsweise zusammen mit den weiteren genannten Daten, an das Backendsystem übertragen. Insbesondere erfolgt ein Übertragen eines (weiteren) Identifikationsdatensatzes.

Bei einer Kontrolle durch einen Kontrolleur kann der Kontrolleur mit einer (nicht gezeigten) Inspektionsvorrichtung die an die Rechenvorrichtung 102 übertragenen Mediumkennungen abrufen, insbesondere empfangen, und für die Kontrolle verwenden. Insbesondere können durch die Inspektionsvorrichtung die Ticketmedien kontrolliert werden, indem die jeweilige Mediumkennung ausgelesen und mit den Mediumkennungen verglichen wird, die von der Rechenvorrichtung empfangen wurde. Wird hierbei festgestellt, dass sich ein Nutzer nicht angemeldet hat und/oder ein Ticketmedium mit einer gesperrten Mediumkennung besitzt, kann der Kontrolleur bekannte Maßnahmen ergreifen.

Die dargestellte Rechenvorrichtung 102 weist eine Mehrzahl von (ggf. verteilt angeordneten) Modulen 104 bis 120 auf. So ist mindestens ein Identifikationsempfangsmodul 104 vorgesehen, zumindest eingerichtet zum Empfangen eines durch eine Validatorvorrichtung 126 des Transportsystems 100 generierten Identifikationsdatensatzes. Wie beschrieben wurde, kann dieser zumindest die erfasste elektronische Mediumkennung eines (nichtregistrierten und/oder registrierten) Ticketmediums 124 enthalten, welches für eine Inanspruchnahme einer Transportdienstleistung verwendet wird.

Ferner ist mindestens ein Abrechnungsmodul 110 vorgesehen, zumindest eingerichtet zum Generieren eines Abrechnungsdatensatzes, zumindest basierend auf der empfangenen Mediumkennung und insbesondere der in Anspruch genommenen Transportdienstleistung.

Bei einer bereits registrierten Mediumkennung kann vorzugsweise zusätzlich, durch das Abrechnungsmodul 110, auf einen bereits gespeicherten Nutzerdatensatz für die Generierung des Abrechnungsdatensatzes zugegriffen werden, insbesondere in Form eines Nutzerkontos. Der Abrechnungsdatensatz enthält zumindest eine der in Anspruch genommenen Transportdienstleistung zugeordnete Transaktionskennung. Die Transaktionskennung kann durch eine (nicht gezeigte) Generierungseinheit bei der Generierung des Abrechnungsdatensatz nach einer vordefinierten Regel generiert werden und/oder aus einer vorab gespeicherten Liste an Transaktionskennungen ausgewählt werden.

Die Rechenvorrichtung 102 weist mindestens ein Zuordnungsmodul 112 auf, eingerichtet zum Zuordnen zumindest der Transaktionskennung zu der elektronischen Mediumkennung.

Ferner ist mindestens ein Speichermodul 114 in der Rechenvorrichtung 102 vorgesehen, eingerichtet zum Speichern zumindest der Zuordnung der elektronischen Mediumkennung zu der Transaktionskennung, vorzugsweise in einer Datenspeicheranordnung 120. Vorliegend umfasst die Rechenvorrichtung 102 beispielhaft die Datenspeicheranordnung 120. In der Datenspeicheranordnung 120 kann zusätzlich der mindestens eine Nutzerdatensatz speicherbar sein.

Die Rechenvorrichtung 102 umfasst darüber hinaus mindestens ein Ausgabemodul 106, eingerichtet zumindest zum Ausgeben des generierten Abrechnungsdatensatzes, insbesondere an den entsprechenden Nutzer. Beispielsweise kann ein Ausgeben ein (unmittelbares oder mittelbares) Übertragen des generierten Abrechnungsdatensatzes an eine weitere Rechenvorrichtung 136 umfassen, insbesondere ein Nutzerendgerät 136 (z.B. ein Computer, Tablet, Smartphone etc.) des Nutzers. Das Nutzerendgerät 136 kann über mindestens ein Kommunikationsmodul 138 verfügen. Es versteht sich, dass der Abrechnungsdatensatz auch in anderer Weise an den Nutzer ausgegeben werden kann.

Ferner weist die Rechenvorrichtung 102 mindestens ein Registrierungsempfangsmodul 108 auf. Das Registrierungsempfangsmodul 108 ist eingerichtet zum Empfangen mindestens einer Registrierungsnachricht (insbesondere von einem Nutzerendgerät 136), enthaltend zumindest die Transaktionskennung des ausgegebenen Abrechnungsdatensatzes.

Wie ferner aus der Figur 1 zu entnehmen ist, umfasst die Rechenvorrichtung 102 mindestens ein Auswertemodul 116, eingerichtet zum Bestimmen der elektronischen Mediumkennung, zumindest basierend auf der mindestens einen gespeicherten Zuordnung von der Transaktionskennung zu der elektronischen Mediumkennung und der Transaktionskennung der empfangenen Registrierungsnachricht.

Die Rechenvorrichtung 102 weist zudem mindestens ein Registrierungsmodul 118 auf, eingerichtet zum Registrieren des nichtregistrierten Ticketmediums 124 durch Erstellen eines Nutzerdatensatzes, enthaltend zumindest die bestimmte elektronische Mediumkennung. Wie bereits beschrieben wurde, kann dieser beispielsweise in der Datenspeicheranordnung 120 gespeichert werden.

Wie ferner zu erkennen ist, kann mindestens ein (drahtloses und/oder drahtgebundenes) Kommunikationsnetz 140 vorgesehen sein, um eine Kommunikation zumindest zwischen den dargestellten Elementen 102, 126, 136 zu ermöglichen.

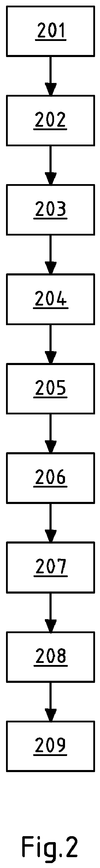

Die Funktionsweise des Transportsystems 100 nach Figur 1, insbesondere ein anmeldungsgemäßer Registrierungsvorgang, wird nachfolgend näher mit Hilfe der Figur 2 beschrieben.

Die Figur 2 zeigt ein Diagramm eines Ausführungsführungsbeispiels eines Verfahrens insbesondere zum Registrieren eines (bisher) nichtregistrierten Ticketmediums 124 in einem Transportsystem 100. Das Ticketmedium 124 ist vorliegend beispielhaft eine Kreditkarte 124 mit einer in einem Speichermittel der Kreditkarte gespeicherten kodierten PAN. Diese ist über eine (kontaktbehaftete oder kontaktlose) Schnittstelle erfassbar.

Es versteht sich, dass bei anderen Varianten der Anmeldung auch andere Ticketmedien alternativ oder zusätzlich verwendet werden können, wie bereits beschrieben wurde.

In einem ersten Schritt 201 erfolgt ein Erfassen, durch eine Validatorvorrichtung 126 eines Transportsystems 100, zumindest der elektronischen Mediumkennung eines nichtregistrierten Ticketmediums, welches für eine Inanspruchnahme der Transportdienstleistung verwendet wird. Wie oben beschrieben wird, kann das Erfassen durch eine Ticketmediumschnittstelle 128 erfolgen. Beispielsweise wird die elektronische Mediumkennung in Form der kodierten PAN im Rahmen eines vorbeschriebenen Anmeldevorgangs und/oder Abmeldevorgangs erfasst.

In einem weiteren Schritt 202 erfolgt ein Übertragen eines Identifikationsdatensatzes, enthaltend zumindest die erfasste elektronische Mediumkennung, an eine Rechenvorrichtung 102 eines Backendsystems. Wie bereits beschrieben wurde, kann die Rechenvorrichtung 102 das Backendsystem des Transportsystems 100 bilden.

Beispielsweise kann das Kommunikationsmodul 132 der Validatorvorrichtung 126 unmittelbar nach Erfassen der elektronischen Mediumkennung den Identifikationsdatensatz generieren. Das Kommunikationsmodul 132 kann dann den generierten Identifikationsdatensatz, enthaltend zumindest die erfasste elektronische Mediumkennung, über das mindestens eine Kommunikationsnetz 140 aussenden. Vorzugsweise kann der Identifikationsdatensatz zusätzlich eine vorbeschriebene Standortangabe und Zeitangabe umfassen. Hierzu kann die Validatorvorrichtung beispielsweise über geeignete Sensoren verfügen, wie Zeitmesser und/oder Positionssensor. Wie beschrieben wurde, kann eine Standortangabe auch aus einer Validatorvorrichtungskennung bestimmbar sein. Das Identifikationsempfangsmodul 104 der Rechenvorrichtung 102 empfängt den generierten und ausgesendeten Identifikationsdatensatz.

Nach dem Empfang des ausgesendeten Identifikationsdatensatzes erfolgt in Schritt 203 ein Generieren, durch die Rechenvorrichtung 102 (insbesondere durch das Abrechnungsmodul 110), eines Abrechnungsdatensatzes, zumindest basierend auf dem übertragenen elektronischen Identifikationsdatensatz und insbesondere der in Anspruch genommenen Transportdienstleistung.

Vorzugsweise kann das Abrechnungsmodul 110 eingerichtet sein, einen Abrechnungsdatensatz zu generieren, basierend auf zwei empfangenen Identifikationsdatensätzen, enthaltend jeweils die gleiche elektronische Mediumkennung. Der erste Identifikationsdatensatz kann ein Anmelde-Identifikationsdatensatz sein, der bei dem oben beschriebenen Anmeldevorgang mit einem bestimmten (bisher nichtregistrierten) Ticketmedium 124 erfasst bzw. generiert wurde.

Der zweite Identifikationsdatensatz kann ein Abmelde-Identifikationsdatensatz sein, der bei dem oben beschriebenen Abmeldevorgang mit diesem bestimmten Ticketmedium 124 erfasst bzw. generiert wurde. Insbesondere aus der jeweiligen Standortangabe und/oder Zeitangabe (und einer Tarifinformation) des ersten und zweiten Identifikationsdatensatzes kann durch das Abrechnungsmodul 110 ein Abrechnungsdatensatz erstellt werden. Dieser kann insbesondere einen für die in Anspruch genommene Transportdienstleistung zu entrichtenden Betrag enthalten. Ferner kann das Abrechnungsmodul 110 insbesondere eine Transaktionskennung generieren und diesem Abrechnungsdatensatz hinzufügen. Vorzugsweise kann der Abrechnungsdatensatz zumindest die Transaktionskennung und den zu entrichtenden Betrag enthalten. Diese beiden Daten zusammen können systemweit (nahezu) eineindeutig sein. Anders ausgedrückt kann durch dieses Datentupel der Abrechnungsdatensatz und insbesondere die zugeordnete elektronische Mediumkennung (wie nachfolgend ausgeführt wird) eineindeutig identifiziert werden.

Wie bereits ausgeführt wurde, kann ein Abrechnungsdatensatz weitere Daten enthalten, wie Informationen über die in Anspruch genommene und abgerechnete Transportdienstleistung (z.B. Fahrtstrecke, angewandter Tarif, Zeitraum etc.).

In Schritt 204 erfolgt ein Zuordnen, durch die Rechenvorrichtung 102, zumindest der Transaktionskennung zu der elektronischen Mediumkennung des mindestens einen empfangenen Identifikationsdatensatzes. Insbesondere ist das Zuordnungsmodul 112 hierzu eingerichtet. Vorzugsweise kann das Datentupel, enthaltend die Transaktionskennung und den zu entrichtenden Betrag (und/oder ein anderes Abrechnungsdatum, der entsprechenden elektronischen Mediumkennung zugeordnet werden.

Diese Zuordnung, also insbesondere das genannte Datentupel und die elektronische Mediumkennung, werden in Schritt 205, durch die Rechenvorrichtung, gespeichert. Insbesondere kontrolliert das Speichermodul 114 die Speicherung dieser Zuordnung, vorzugsweise in einer Datenspeicheranordnung 120. Die Datenspeicheranordnung 120 kann durch das Speichermodul 114 und/oder einem anderen Modul kontrolliert werden.

In Schritt 206 erfolgt ein Ausgeben, durch die Rechenvorrichtung 102, des generierten Abrechnungsdatensatzes. Das Ausgeben erfolgt, durch das Ausgabemodul 106, insbesondere derart, dass der Nutzer des Ticketmediums 124 über den Inhalt des Abrechnungsdatensatzes informiert wird. Beispielsweise kann eine Abrechnungsnachricht über ein Kommunikationsnetz 140 versendet werden.

In Schritt 207 erfolgt ein Empfangen, durch die Rechenvorrichtung 102, mindestens einer Registrierungsnachricht, enthaltend zumindest die Transaktionskennung des ausgegebenen Abrechnungsdatensatzes. Insbesondere empfängt ein Registrierungsempfangsmodul 108 eine Registrierungsnachricht. Vorteilhafterweise kann durch ein Nutzerendgerät 136 die Registrierungsnachricht generiert und insbesondere über das mindestens eine Kommunikationsnetz 140 versendet werden. Beispielsweise kann der Nutzer mit Hilfe einer Nutzerschnittstelle des Nutzerendgeräts 136 die Transaktionskennung und vorzugsweise den genannten Betrag manuell eingeben.

Bei anderen Varianten der Anmeldung kann auch eine automatische Erfassung dieser Daten erfolgen. Ferner kann bei anderen Varianten die mindestens eine Registrierungsnachricht weitere Nutzerdaten umfassen, wie Nutzername, Adressdaten, Abrechnungsdaten etc. Es versteht sich, dass zwei oder mehr Registrierungsnachrichten versendet werden können, wie zuvor ausgeführt wurde.

Bei einem Empfang einer Registrierungsnachricht erfolgt in Schritt 208 ein Auswerten des Inhalts der empfangenen Registrierungsnachricht durch die Rechenvorrichtung 102.

So erfolgt ein Bestimmen, durch das Auswertemodul 116, der elektronischen Mediumkennung, zumindest basierend auf der mindestens einen gespeicherten Zuordnung von der Transaktionskennung zu der elektronischen Mediumkennung und der Transaktionskennung der empfangenen Registrierungsnachricht. In dem vorliegenden Beispiel erfolgt insbesondere ein Vergleichen des empfangenen Datentupels, enthaltend Transaktionskennung und Betrag, mit den gespeicherten Datentupel, enthaltend jeweils Transaktionskennung und Betrag. Insbesondere bei Feststellung der Identität zwischen dem empfangenen Datentupel und einem gespeicherten Datentupel wird als zu registrierende elektronische Mediumkennung die elektronische Mediumkennung bestimmt, die diesem gespeicherten Datentupel zugeordnet ist.

Nach einem Bestimmen der zu registrierenden elektronischen Mediumkennung erfolgt in Schritt 209 ein Registrieren, durch die Rechenvorrichtung 102, des nichtregistrierten Ticketmediums 124 durch Erstellen eines Nutzerdatensatzes, enthaltend zumindest die bestimmte elektronische Mediumkennung.

Vorzugsweise kann, durch das Registrierungsmodul 118, ein Nutzerdatensatz erstellt werden, der weitere Nutzerdaten enthält, wie Nutzername, Adressdaten, Abrechnungsdaten etc.

## Patentansprüche

1. Verfahren zum Registrieren eines Ticketmediums (124) für die Nutzung einer Transportdienstleistung, umfassend:
- Erfassen, durch eine Validatorvorrichtung (126) eines Transportsystems (100), zumindest einer elektronischen Mediumkennung eines nichtregistrierten Ticketmediums (124), welches für eine Inanspruchnahme der Transportdienstleistung verwendet wird,
- Übertragen eines Identifikationsdatensatzes, enthaltend zumindest die erfasste elektronische Mediumkennung, an eine Rechenvorrichtung (102),
- Generieren, durch die Rechenvorrichtung (102), eines Abrechnungsdatensatzes, zumindest basierend auf dem übertragenen elektronischen Identifikationsdatensatz,
- wobei der Abrechnungsdatensatz zumindest eine der in Anspruch genommenen Transportdienstleistung zugeordnete Transaktionskennung enthält,
- Zuordnen, durch die Rechenvorrichtung (102), zumindest der Transaktionskennung zu der elektronischen Mediumkennung,
- Speichern, durch die Rechenvorrichtung (102), zumindest der Zuordnung der elektronischen Mediumkennung zu der Transaktionskennung,
- Ausgeben, durch die Rechenvorrichtung (102), des generierten Abrechnungsdatensatzes,
- Empfangen, durch die Rechenvorrichtung (102), mindestens einer Registrierungsnachricht, enthaltend zumindest die Transaktionskennung des ausgegebenen Abrechnungsdatensatzes,
- Bestimmen, durch die Rechenvorrichtung (102), der elektronischen Mediumkennung, zumindest basierend auf der mindestens einen gespeicherten Zuordnung von der Transaktionskennung zu der elektronischen Mediumkennung und der Transaktionskennung der empfangenen Registrierungsnachricht, und
- Registrieren, durch die Rechenvorrichtung (102), des nichtregistrierten Ticketmediums (124) durch Erstellen eines Nutzerdatensatzes, enthaltend zumindest die bestimmte elektronische Mediumkennung.

2. Verfahren nach Anspruch 1, **dadurch gekennzeichnet, dass**
- das Bestimmen der elektronischen Mediumkennung zumindest ein Vergleichen der Transaktionskennung der empfangenen Registrierungsnachricht mit der mindestens einen gespeicherten Transaktionskennung umfasst.

3. Verfahren nach Anspruch 1 oder 2, **dadurch gekennzeichnet, dass**
- das Erstellen eines Nutzerdatensatzes ein Speichern mindestens eines weiteren Nutzerdatums umfasst, wobei das mindestens eine weitere Nutzerdatum ausgewählt ist aus der Gruppe, umfassend:
- Nutzername,
- Adressdaten des Nutzers,
- Nutzerpasswort,
- Abrechnungsdaten,
- Transportdienstleistungstarifdaten
- Kontodaten
- Daten weiterer Zahlmedien
- Zugehörigkeit zu einer Nutzergruppe.

4. Verfahren nach einem der vorherigen Ansprüche, **dadurch gekennzeichnet, dass**
- die Transaktionskennung eine eineindeutige Transaktionskennung ist.

5. Verfahren nach einem der vorherigen Ansprüche, **dadurch gekennzeichnet, dass** das Ausgeben des generierten Abrechnungsdatensatzes in Form eines Kontoauszugs erfolgt.

6. Verfahren nach einem der vorherigen Ansprüche, **dadurch gekennzeichnet, dass**
- der Abrechnungsdatensatz mindestens ein weiteres Abrechnungsdatum enthält,
- wobei das Zuordnen zumindest ein Zuordnen der Transaktionskennung und des weiteren Abrechnungsdatums zu der elektronischen Mediumkennung umfasst,
- wobei das Speichern zumindest ein Speichern der Zuordnung der elektronischen Mediumkennung zu der Transaktionskennung und dem weiteren Abrechnungsdatum umfasst,
- wobei die Registrierungsnachricht zumindest die Transaktionskennung und das weitere Abrechnungsdatum enthält, und
- wobei das Bestimmen der elektronischen Mediumkennung zumindest ein Bestimmen der elektronischen Mediumkennung, basierend auf der mindestens einen gespeicherten Zuordnung von der elektronischen Mediumkennung zu der Transaktionskennung und dem weiteren Abrechnungsdatum und der Transaktionskennung und dem weiteren Abrechnungsdatum der empfangenen Registrierungsnachricht, umfasst.

7. Verfahren nach Anspruch6, **dadurch gekennzeichnet, dass**
- das mindestens eine weitere Abrechnungsdatum ein Abrechnungsdatum ist aus der Gruppe, umfassend:
- ein für die in Anspruch genommene Transportdienstleistung zu entrichtender Betrag,
- ein für die in Anspruch genommene Transportdienstleistung angewandtes Tarifmerkmal,
- ein mit der in Anspruch genommenen Transportdienstleistung in Beziehung stehendes Zeitdatum,
- ein mit der in Anspruch genommenen Transportdienstleistung in Beziehung stehendes Ortsdatum.

8. Verfahren nach einem der vorherigen Ansprüche, **dadurch gekennzeichnet, dass**
- die elektronische Mediumkennung eine kodierte Primary Account Number PAN ist.

9. Verfahren nach einem der vorherigen Ansprüche, **dadurch gekennzeichnet, dass** das Verfahren ferner umfasst:
- Prüfen, durch die Rechenvorrichtung (102), ob ein für die in Anspruch genommene Transportdienstleistung zu entrichtender Betrag innerhalb einer bestimmten Zeitdauer entrichtet wurde, und
- Aussenden, durch die Rechenvorrichtung (102), einer Sperrnachricht an die mindestens eine Validatorvorrichtung (126), derart, dass die Verwendung des Ticketmediums (124) an der mindestens einen Validatorvorrichtung (126) gesperrt wird.

10. Rechenvorrichtung (102) eines Transportsystems (100), umfassend:
- mindestens ein Identifikationsempfangsmodul (104), eingerichtet zum Empfangen eines durch eine Validatorvorrichtung (126) des Transportsystems (100) generierten elektronischen Identifikationsdatensatz eines nichtregistrierten Ticketmediums (124), welches für eine Inanspruchnahme einer Transportdienstleistung verwendet wird,
- wobei der elektronische Identifikationsdatensatz mindestens eine durch die Validatorvorrichtung (126) erfasste elektronische Mediumkennung des nichtregistrierten Ticketmediums (124) enthält,
- mindestens ein Abrechnungsmodul (110), eingerichtet zum Generieren eines Abrechnungsdatensatzes, zumindest basierend auf dem empfangenen elektronischen Identifikationsdatensatz und der in Anspruch genommenen Transportdienstleistung,
- wobei der Abrechnungsdatensatz zumindest eine der in Anspruch genommenen Transportdienstleistung zugeordnete Transaktionskennung enthält,
- mindestens ein Zuordnungsmodul (112), eingerichtet zum Zuordnen zumindest der Transaktionskennung zu der elektronischen Mediumkennung,
- mindestens ein Speichermodul (114), eingerichtet zum Speichern zumindest der Zuordnung der elektronischen Mediumkennung zu der Transaktionskennung
- mindestens ein Ausgabemodul (106), eingerichtet zum Ausgeben des generierten Abrechnungsdatensatzes,
- mindestens ein Registrierungsempfangsmodul (108), eingerichtet zum Empfangen mindestens einer Registrierungsnachricht, enthaltend zumindest die Transaktionskennung des ausgegebenen Abrechnungsdatensatzes,
- mindestens ein Auswertemodul (116), eingerichtet zum Bestimmen der elektronischen Mediumkennung, zumindest basierend auf der mindestens einen gespeicherten Zuordnung von der Transaktionskennung zu der elektronischen Mediumkennung und der Transaktionskennung der empfangenen Registrierungsnachricht, und
- mindestens ein Registrierungsmodul (118), eingerichtet zum Registrieren des nichtregistrierten Ticketmediums (124) durch Erstellen eines Nutzerdatensatzes, enthaltend zumindest die bestimmte elektronische Mediumkennung.

11. Transportsystem (100), umfassend:
- mindestens eine Rechenvorrichtung (102) nach Anspruch 9, und
- mindestens eine Validatorvorrichtung (126), eingerichtet zum Erfassen eines elektronischen Identifikationsdatensatzes eines nichtregistrierten Ticketmediums (124), welches für eine Inanspruchnahme einer Transportdienstleistung verwendet wird.
